# EUROPEAN PATENT SPECIFICATION

(11) **EP 4 179 264 B1**
(45) Date of publication and mention of the grant of the patent: **24.04.2024**
(21) Application number: 21729959.3
(22) Date of filing: 28.05.2021
(51) Int. Cl.: F24F 11/38, F24F 11/50, F24F 11/64, F24F 11/49

(54) **AN ANOMALY DETECTION DEVICE AND METHOD FOR A COMFORT SYSTEM**
ANOMALIEDETEKTIONSVORRICHTUNG UND -VERFAHREN FÜR EIN KOMFORTSYSTEM
DISPOSITIF DE DÉTECTION D'ANOMALIE ET PROCÉDÉ POUR UN SYSTÈME DE CONFORT

(30) Priority: 10.07.2020 BE 202005516
(43) Date of publication of application: 17.05.2023
(73) Proprietor: Renson NV, 8790 Waregem (BE)
(72) Inventor: VANDEKERCKHOVE, Steven, Chris, Emmanuel, 8500 Kortrijk (BE)
(74) Representative: IP HILLS NV
(86) International application number: PCT/IB2021/054681
(87) International publication number: WO 2022/008993

(56) References cited:
- EP-A1- 3 348 925
- US-A1- 2019 032 948
- US-B1- 9 696 055
- US-B1- 10 253 995

## Description

### Technical Field

The present invention relates to anomaly detection for a comfort system in a building comprising one or more rooms. More specifically, this invention relates to a device and a computer-implemented method for detecting anomalies in a comfort system.

### Prior Art

There are various types of ventilation systems which make it possible to ventilate one or more rooms in a building. Thus, a distinction is made between ventilation systems with natural supply and mechanical discharge of air, also referred to as C systems in Belgium and the Netherlands, and ventilation systems with mechanical supply and mechanical discharge of air, also referred to as D systems in Belgium and the Netherlands, and always combined with heat recovery in practice. These two systems may be designed as both centralized and decentralized systems, optionally demand-driven. The centralized embodiment comprises one ventilator which extracts the air from several rooms. The decentralized embodiment comprises several ventilators which each have a separate discharge duct and which are individually adjustable in order to regulate the extraction of air for each room individually. In a ventilation system with natural supply and mechanical discharge, air is discharged from the building actively, but the supply of air takes place passively. To this end, windows may for example be provided with air vents or tilt windows which are in communication with the open air. By means of air ducts and air vents, one or more ventilation motors extract air from spaces in the building which have to be ventilated, typically humid spaces, such as for example the kitchen, the bathroom and the toilet in a dwelling. In a ventilation system with mechanical supply and discharge and with heat/energy recovery, air is actively discharged to the outside and actively supplied from outside via one or more ventilators which are in communication with the spaces which have to be ventilated via supply and discharge ducts. Usually, these are High Efficiency (HR) ventilation systems in which a heat-recovery unit uses the heat from the discharged air to partly heat the air supplied from outside before this supplied air is distributed over the spaces to be ventilated.

In addition to one or more ventilation motors, a centralized or decentralized ventilation system therefore also comprises one or more supply lines and/or vents and/or discharge lines typically including a valve and/or flow regulator for each supply duct or discharge duct. The ventilation capacity, expressed in cubic meters per hour (m³/u), litres per second (l/s) or litres per hour (I/u), can then be regulated for each of the spaces to be ventilated by adjusting the motor speed, position of the valves and/or flow regulators. The ventilators, valves and flow regulators form the controllable apparatuses of the ventilation system. Other controllable apparatuses, such as air vents, may possibly be present.

Usually, a comfort system, for example a ventilation system or a sunblind system, is configured by a fitter using rules and set values before start-up. The set values are for example threshold values for sensor parameters which cause a modification of the ventilator speed, the valve position, or another controllable operational parameter of one of the apparatuses. After start-up, the comfort system is automatically controlled on the basis of the set rules and measured sensor values. The comfort system may also be controlled on the basis of manual input by the users of the building in which it is installed. Usually, manual input from users will be given priority over automatic rule-based control, but the system will return to automatic control after a certain amount of time.

United States Patent Application US 10,253,995 B1 entitled "Systems and Methods for Mitigating Smoke Damage to a Property" describes a heating, ventilation and air conditioning (HVAC) system comprising a controller configured to receive alerts and/or intelligent home telematics data from sensors mounted in the interior and/or exterior of a property. The controller is configured to deactivate the air circulation system of the HVAC system in response to receiving an alert and/or intelligent home telematics data indicative for potential presence of smoke in a location associated with the property.

The performance of the comfort system, once started up, depends greatly on the quality of and the attention given to installation and maintenance. Anomalies resulting in a comfort system not functioning in an optimum manner or adversely impacting on its performance are a regular occurrence. Thus, a fitter may have installed an apparatus of the incorrect type. A bedroom valve may, for example, be installed in a bathroom, as a result of which the bathroom is not ventilated in an optimum manner. A room may be given a new function after it has been renovated, as a result of which apparatuses of the comfort system are no longer optimal for this room. Blockages or leaks may occur in the air supply or discharge ducts of the comfort system. An apparatus or sensor may become soiled or blocked, start to become less accurate or even fail completely.

The traditional way of dealing with a defective or faulty comfort system is to ask a technician to come on site. The technician inspects the system or certain components thereof and/or interprets stored data in order to arrive at a final diagnosis and to propose repair, control or replacement of certain apparatuses in the comfort system. Such an approach of anomalies is time-consuming and labour-intensive, expensive, and the quality of the solution depends on the experience of the technician. The traditional approach is not scalable and not predictive, as a result of which it is not possible to prevent anomalies.

It is therefore the object of this invention to provide a technological solution for detecting anomalies in a comfort system which is scalable and predictive and no longer depends on time-consuming and expensive on-site interventions by technicians.

### Summary of the Invention

The invention relates to an anomaly detection device according to Claim 1, for detecting an anomaly in a comfort system installed in a building comprising one or more rooms, said anomaly detection device comprising:
- an interface for obtaining sensor data from one or more sensors in said comfort system;
- an interface for obtaining operational data from one or more apparatuses in said comfort system;
- a interface for obtaining external data from one or more sources outside said comfort system;
- a central database for storing said sensor data, said operational data and said external data as respective time sequences, referred to collectively as stored data;
- a first profile module configured to generate an apparatus-type profile for each type of apparatus or sensor on the basis of said stored data;
- a second profile module configured to generate an apparatus-profile for each individual apparatus or sensor on the basis of said stored data;
- an analysing module coupled to said database, said first profile module and said second profile module, and configured to:
   - compare, in a first test, recent operational data and/or sensor data for a specific apparatus or sensor with the apparatus-type profile of the type of apparatus to which said specific apparatus or sensor belongs; and/or
   - compare, in a second test, recent operational data and/or sensor data for a specific apparatus or sensor with the apparatus-profile of said specific apparatus or sensor; and/or
   - compare, in a third test, recent operational data and/or sensor data and/or external data for a specific apparatus or sensor with the apparatus-profile of one or more related apparatuses for said specific apparatus or sensor;
- an anomaly detection module configured to detect an anomaly for said specific apparatus or sensor on the basis of a deviation in the first test, the second test and/or the third test in excess of a threshold.

The anomaly detection device according to the invention will thus construct profiles from sensor data, operational data and/or external data which are collected centrally - typically for several comfort systems installed in different buildings. On the one hand, profiles are constructed for each type of apparatus. Such profiles model the standard behaviour of a certain type of apparatus and make it possible to compare apparatuses in different installations to one another in order to detect anomalies - deviations from the standard behaviour. On the other hand, profiles are constructed for each specific apparatus. Such profiles make it possible to compare an installation or apparatus to itself, more specifically to the operation at an earlier point in time, again so that anomalies - deviations from previous behaviour - can be detected.

A comfort system comprises every system which has an impact on the environmental comfort of a person who is present in a building. Examples of a comfort system are a ventilation system, a sunblind system, a heating system, an air-conditioning system, a heating, ventilation and air-conditioning system (HVAC), or a combination of the above. The environmental comfort is a combination of one or more factors which are immediately detectable by the human senses and can be influenced by the comfort system, such as the temperature, the smell (for example of volatile organic components), the atmospheric humidity, the light intensity, the draught, and/or the noise which is produced, for example, by an apparatus of the comfort system or which penetrates into the building via, for example, an air vent or tilt window, but possibly also comprises one or more factors which are more likely to be detectable indirectly, such as fine particular matter or the carbon dioxide content in the air which, in case of relatively high values over a prolonged period of time, will cause tiredness or sleepiness in humans. The environmental comfort may be influenced by comfort systems of different types, such as for example a ventilation system (optionally controlled), a sunblind system (optionally controlled), sensors, such as temperature sensors, CO₂ sensors, light sensors, RV sensors (Rotational Vibration), etc. The environmental comfort is personal because it cannot be fixed at the same value for everyone. When considering a combination of temperature and atmospheric humidity, one person may feel comfortable at an ambient temperature of, for example, 25°C and a relative atmospheric humidity of 60%, whereas another person will have the same comfortable feeling, for example, at an ambient temperature of 20°C and a relative humidity of 60%.

The anomaly detection device according to the invention will collect at least two different types of data and store these over the long term in a central database in which the data from several installations of comfort systems are typically brought together. A first type of data comprises sensor data obtained from one or more sensors in the comfort system. Sensor data are numerical values for a physical variable measured by a sensor which forms part of the comfort system, such as for example the temperature in a room, the atmospheric humidity, the noise intensity, the light intensity, the fine particle content, the CO₂ content, etc. The numerical values for the physical or chemical parameters can be measured directly by a sensor or may be determined indirectly from the sensor measurements, for example by correlation. A second type of data comprises operational data from one or more apparatuses of the comfort system. The operational data are current set values of parameters of controllable apparatuses in the comfort system, which are usually stored in the apparatus and are thus obtained from the apparatus itself by the anomaly detection device. Examples of operational data are the valve position (expressed as an opening percentage), the capacity of the central ventilator, the average air flow rate per minute of a flow regulator, actuator data, etc. The sensor data and operational data are stored as a time sequence: a sequence of values as a function of time, each with a time stamp. This may be performed on a regular basis, for example one value per minute, or on an irregular basis, for example one value every time there is a significant change.

It is possible for the anomaly detection device to also collect other data. A third type of data which the anomaly detection device could collect consists, for example, of external data obtained from one or more sources which do not form part of the comfort system, but which may be associated with the operation of the comfort system. Examples thereof are the outside temperature, the air pressure, the outdoor air quality, sensor data obtained from sensors which do not form part of the comfort system, feedback which is obtained from users of the building, etc. The external sources are then, for example, apparatuses and sensors which are connected to the internet, computer programs or applications which ask users about their comfort experience, etc.

The sensor data from one or more sensors of the comfort system, the operational data from one or more apparatuses of the comfort system, and optionally the external data from sources outside the comfort system are stored over the long term in a central database. The central database may be a cloud-based storage system (the management of which is typically provided by a third party, namely the cloud system operator) or the central database may be managed by the manufacturer of the comfort system on dedicated servers. The expression over the long term is understood to mean that the data are stored for more than 24 hours, preferably several weeks or even several months or years, before the data are regarded as being possibly out of date and are removed from the central database.

A first profile module will generate an apparatus-type profile for each type of apparatus and for each use of such a type of apparatus on the basis of the stored data. Thus, for example, a profile will be generated for a certain type of bathroom valve when used for a luxury bathroom, for the same type of bathroom valve when used for a shower room, for a certain type of bedroom valve when used for a double bedroom, for the same type of bedroom valve when used for a children's room, for a certain type of ventilation motor, for a certain type of flow regulator, etc. To this end, the first profile module uses the operational data from a smart selection of apparatuses of that type, irrespective of the comfort system or the installation of which these apparatuses form part. The first profile module may also use sensor data and/or external data obtained from sensors and/or external sources which may be correlated with the apparatuses of that type in order to generate an apparatus-type profile. Thus, for the apparatus-type profile of a certain type of bedroom valve, use may be made of the sensor data from an atmospheric humidity sensor which is placed in the bedroom for which such a bedroom valve is used. The apparatus-type profile contains standard values or standard intervals for values of operational parameters of that type of apparatus and/or of sensor parameters related to that type of apparatus. The standard values or standard intervals are taken from operational installations, for example by averaging over time and averaging over many installations. An apparatus-type profile may also be generated for a certain type of sensor used under certain circumstances.

A second profile module which forms part of the device according to this invention will use the stored data to construct profiles for every individual apparatus. To this end, the second profile module uses the operational data which have been obtained over a prolonged period of time from the specific apparatus itself, and possibly also the sensor data obtained over a prolonged period of time from one or more sensors which may be correlated with the specific apparatus. The apparatus-profile models the standard behaviour of the specific apparatus, depending on the layout and arrangement of the space for which the specific apparatus is being used, and also the use of this space (the conditions in which the specific apparatus is used), and thus comprises standard values or standard intervals for values of the operational parameters of that specific apparatus. The standard values or standard intervals are obtained from the specific installation of which the apparatus forms part, for example by averaging over time.

An analysing module which forms part of the device according to the invention uses the apparatus-type profiles, the apparatus-profiles and recently obtained operational data and sensor data in order to perform three different kinds of tests. In a first kind of test, recent operational data from a specific apparatus and/or sensor data from sensors which are correlated with that specific apparatus will be compared to the standard values from the apparatus-type profile for the type to which the specific apparatus belongs. Recent data are, for example, data which were obtained in the last 24 hours. Recent data which can be related to a specific apparatus will thus be compared to a reference profile of similar apparatuses (same type) which may form part of the same comfort system or of other installations. This first test may also be performed for a sensor or actuator with the nuance that in that case only sensor data from that specific sensor (no operational data) will be compared to the type-profile obtained for sensors of the same type. The first test makes it possible to compare the behaviour of an apparatus or sensor to the behaviour of the same type of apparatus or sensor in other installations. A significant deviation in the behaviour is an indication of a possible anomaly, for example an incorrect type of apparatus or sensor, a different use of the room in which the apparatus or the sensor is situated, etc. In a second kind of test, recent operational data and/or sensor data from sensors which are correlated with that specific apparatus will be compared to the standard values from the apparatus-profile of the specific apparatus. In this case as well, recent data are, for example, data which were obtained in the last 24 hours. This second test may also be performed for a sensor or actuator with the nuance that in that case only sensor data from this specific sensor (no operational data) will be compared to the profile obtained for this specific sensor. This second test makes it possible to compare the behaviour of an apparatus or sensor to the behaviour of that same apparatus or the same sensor in the past. A significant deviation in behaviour is an indication that an anomaly has occurred, for example a leak or an obstruction in a line, a defect or pollution, as a result of which repair or maintenance will be necessary. In a third kind of test, recent operational data and/or sensor data from sensors which are correlated with that specific apparatus will be compared to the standard values from the apparatus-profile of a related apparatus. In this case as well, recent data are, for example, data which were obtained during the last 24 hours. This third test may also be performed for a sensor or actuator with the nuance that in that case only sensor data from this specific sensor (no operational data) will be compared to the profile obtained for one or more related sensors. A related apparatus or related sensor is an apparatus or sensor which measures similar parameters as those which are measured by the specific apparatus or the specific sensor. This may be exactly the same parameter or a parameter which may be correlated with a parameter which is measured by the specific apparatus or the specific sensor. The related apparatus or the related sensor may form part of the comfort system, but may also be outside the comfort system. The growing tendency to integrate sensors in all kinds of apparatuses and to connect such apparatuses or sensors via the internet (Internet of Things, abbreviated loT) increases the chance of measuring the same parameter for several sensors or apparatuses in a building or room. The anomaly detection device according to this invention will use this in order to detect anomalies via the third kind of test. After all, this third test makes it possible to compare the behaviour of an apparatus or sensor to the behaviour of a related apparatus or sensor which, in the same building or in the same room, measures the same parameter or measures a parameter which may be correlated with a measurement of the specific apparatus or the specific sensor. A significant deviation is an indication that an anomaly has occurred, for example a defective sensor which has to be replaced.

An anomaly detection module which forms part of the anomaly detection device according to the invention and which contains, for example, preprogrammed thresholds will, on the basis of the results from the first kind of test, the second kind of test and/or the third kind of test come to the conclusion that there is an anomaly and will report this to the manager of the comfort system or the building. The detection of anomalies thus takes place continuously and automatically, without the intervention of a technician. Human errors and dependency on the expertise of a technician are thus excluded. A new installation may use the apparatus-type profiles which have already been compiled in the central database, which contributes to scalability. Anomalies will be detected sooner, as a result of which preventive measures can be taken and the costs for replacing apparatuses and any damage caused by apparatuses functioning poorly are reduced.

In a possible embodiment of the anomaly detection device according to the invention, defined in Claim 2, the anomaly detection module is configured to detect, on the basis of said first test, that an apparatus of the incorrect type was installed in a room of said building.

Indeed, when the data which are captured by a specific apparatus or by sensors and actuators which are associated with this apparatus deviate too much from the standard values or standard intervals for the same type of apparatus in other installations, then it is probable that an incorrect type of apparatus was installed, i.e. an apparatus which is not suitable for the function or the use of the room in which it was fitted. Thus, there are different types of valves in a comfort system, for example: a bathroom valve, a toilet valve, a kitchen valve, a bedroom valve, etc. An indication is given on the valve itself or on the packaging thereof about which kind of valve it is, for example by means of a sticker. A mistake or a moment of carelessness on the part of the fitter is then sufficient for him to fit, for example, a bedroom valve in the bathroom, as a result of which the bathroom will not be ventilated correctly. By comparing the operational data and sensor data which can be associated with the incorrectly fitted bedroom valve to the type-profile of similar bedroom valves in other installations, a deviation will be noticed - for example, the atmospheric humidity will regularly increase due to the use of a shower or bathtub in the bathroom, which is not expected with regard to a bedroom valve - which indicates that the wrong valve was fitted. In many cases, it will even be possible to determine the correct apparatus type or the correct room type for the incorrectly installed apparatus. Analogously, it will be possible to detect, on the basis of the first test, that the function or the use of a room has changed, for example due to renovation, as a result of which an anomaly will again be detected which indicates that the incorrect type of apparatus is being used in a room.

In one possible embodiment of the anomaly detection device according to the invention, defined in Claim 3, the anomaly detection module is configured to detect obstruction of a line in said comfort system on the basis of said first test and said second test.

In the case of an obstruction, a room will be ventilated less well and polluting particles will thus be removed less efficiently. The cause of such an obstruction may be varied: an air vent may be entirely or partly blocked, for example by a piece of furniture, a valve may become stuck in a position in which the air flow is entirely or partly blocked, dust or mould resulting from condensation may reduce the air flow, etc. In each of these cases, recent operational data and/or sensor data will deviate from the standard values for a similar apparatus in other installations (positive first test), and the recent operational data and/or sensor data will deviate from the data for the apparatus obtained previously when the obstruction was not present yet (positive second test). A combination of the first test and second test thus allows the anomaly detection device according to the invention to detect an obstruction in a line. Often, it is even possible to preventatively detect a developing obstruction (dust accumulation and mould formation occur gradually). Usually, it will also be possible to detect the cause of the obstruction.

In one possible embodiment of the anomaly detection device according to the invention, defined in Claim 4, the anomaly detection module is configured to detect an air leak in said comfort system on the basis of said first test and said second test.

If there is an air leak in the comfort system, then the values of the sensor data will start to deviate from the standard values in similar installations (positive first test) and will start to deviate from the values which were measured earlier in the same installation (positive second test). Thus, the flow rate - measured directly or indirectly via the pressure drop - will start to decrease, the decrease in the CO₂ content upon ventilation will be slower, etc. The anomaly detection device according to the invention can thus detect an air leak by means of a combination of the first test and second test. Often, it will also be possible to identify the location of the air leak.

In one possible embodiment of the anomaly detection device according to the invention, defined in Claim 5, the anomaly detection module is configured to detect a defective apparatus in said comfort system on the basis of said second test.

Indeed, if an apparatus becomes defective, for example a valve, then the apparatus values and sensor values which are associated with this valve will start to deviate greatly from previously measured values. A positive second test may thus enable the anomaly detection device according to this invention to detect a defective valve. The defective valve may possibly also be actuated, as a result of which additional tests may be performed which provide confirmation of the fact that the valve is defective.

In a possible embodiment of the anomaly detection device according to the invention, defined in Claim 6, the anomaly detection module is configured to detect a defective sensor in said comfort system on the basis of said first test and said second test and said third test.

A defective sensor can be detected in different ways. The sensor values will start to deviate from the standard values or standard intervals which are measured by similar sensors in other installations (positive first test), the sensor values will start to deviate from those measured earlier by the same sensor before the defect occurred (positive second test), and the sensor values will start to deviate from the values which are measured by a related sensor in the same room (positive third test).

In one possible embodiment of the anomaly detection device according to the invention, defined in Claim 7, the anomaly detection module is configured to detect a soiled sensor in said comfort system on the basis of said second test.

The anomaly detection device is also able to detect contamination of a sensor. Such a sensor will typically generate sensor values which will drift when viewed over a prolonged period. This drift will become the reason for a positive second test in which the recent sensor values are compared to the sensor values which this same sensor generated in the past. When a certain threshold is exceeded, an anomaly may be detected which triggers replacement or maintenance of the sensor.

In one embodiment of the anomaly detection device according to the invention, defined in Claim 8, said comfort system comprises a ventilation system.

The anomaly detection device according to the invention will greatly improve detection of anomalies in a ventilation system of any type with regard to scalability. The ventilation system may be provided with one or more sensors, may comprise actuable apparatuses, such as valves, flow regulators, ventilation grates and one or more motors, optionally combined with manually operable apparatuses, such as windows (which can be opened manually for ventilation) or manually operable ventilation grates.

In one embodiment of the anomaly detection device according to the invention, defined in Claim 9, said comfort system comprises a sunblind system.

The anomaly detection device according to the invention will greatly improve detection of anomalies in a sunblind system of any type with regard to scalability. The sunblind system may be provided with one or more sensors, and may comprise actuable apparatuses, such as rotatable slats, a roll of cloth, etc., optionally combined with manually operable apparatuses. The person skilled in the art will understand that the anomaly detection device according to the invention will also greatly improve detection of anomalies in a building equipped with both a ventilation system and a sunblind system.

According to a second aspect, the invention relates to a computer-implemented method according to Claim 10 for detecting an anomaly in a comfort system installed in a building comprising one or more rooms, said method comprising:
- obtaining sensor data from one or more sensors in said comfort system;
- obtaining operational data from one or more apparatuses in said comfort system;
- obtaining external data from one or more sources outside said comfort system;
- storing said sensor data, said operational data and said external data in a central database as respective time sequences, collectively referred to as stored data;
- generating an apparatus-type profile for each type of apparatus or sensor on the basis of said stored data;
- generating an apparatus-profile for each individual apparatus or sensor on the basis of said stored data;
- analysing said stored data comprising:
   - in a first test, comparing recent operational data and/or sensor data for a specific apparatus or sensor with the apparatus-type profile of the type of apparatus to which said specific apparatus or sensor belongs; and/or
   - in a second test, comparing recent operational data and/or sensor data for a specific apparatus or sensor with the apparatus-profile of said specific apparatus or sensor; and/or
   - in a third test, comparing recent operational data and/or sensor data and/or external data for a specific apparatus or sensor with the apparatus-profile of one or more related apparatuses for said specific apparatus or sensor;
- detecting an anomaly for said specific apparatus or sensor on the basis of a deviation in the first test, the second test and/or the third test in excess of a threshold.

According to a third aspect, the invention relates to a computer program product according to Claim 11, containing computer-executable instructions to perform the following steps if this program is performed on a computer for detecting an anomaly in a comfort system installed in a building comprising one or more rooms:
- obtaining sensor data from one or more sensors in said comfort system;
- obtaining operational data from one or more apparatuses in said comfort system;
- obtaining external data from one or more sources outside said comfort system;
- storing said sensor data, said operational data and said external data in a central database as respective time sequences, collectively referred to as stored data;
- generating an apparatus-type profile for each type of apparatus or sensor on the basis of said stored data;
- generating an apparatus-profile for each individual apparatus or sensor on the basis of said stored data;
- analysing said stored data comprising:
   - in a first test, comparing recent operational data and/or sensor data for a specific apparatus or sensor with the apparatus-type profile of the type of apparatus to which said specific apparatus or sensor belongs; and/or
   - in a second test, comparing recent operational data and/or sensor data for a specific apparatus or sensor with the apparatus-profile of said specific apparatus or sensor; and/or
   - in a third test, comparing recent operational data and/or sensor data and/or external data for a specific apparatus or sensor with the apparatus-profile of one or more related apparatuses for said specific apparatus or sensor;
- detecting an anomaly for said specific apparatus or sensor on the basis of a deviation in the first test, the second test and/or the third test in excess of a threshold.

According to a fourth aspect, the invention relates to a computer-readable storage means according to Claim 12, containing the computer program product according to Claim 11.

### Brief Description of the Drawings

Drawing 1 is a functional block diagram of an embodiment of the anomaly detection device 100 according to this invention;
Drawing 2 illustrates an embodiment of the method for detecting anomalies in a comfort system according to this invention; and
Drawing 3 shows a computer system suitable for performing one or more steps in embodiments of the method according to this invention.

### Description of Embodiments

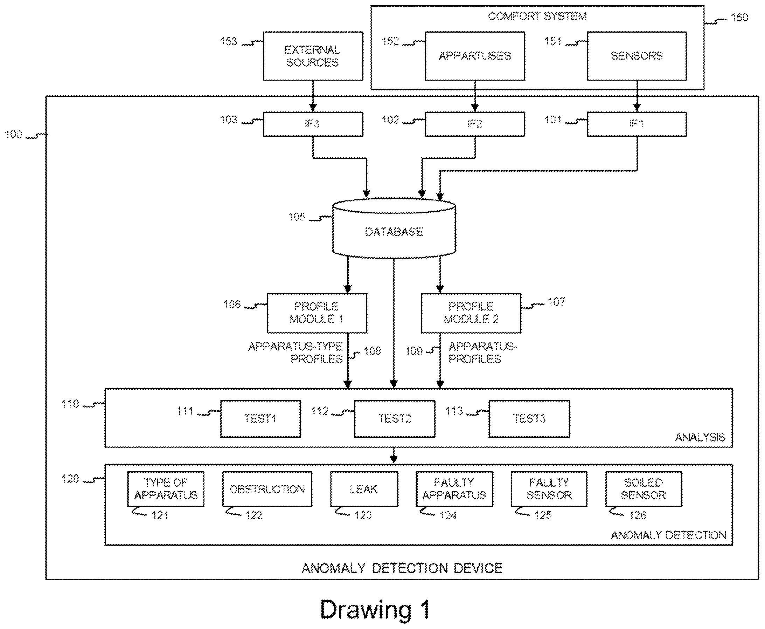

Drawing 1 shows a comfort system 150 comprising apparatuses 152 and sensors 151. The comfort system 150 is assumed to have been fitted in a building comprising several rooms and was configured or adjusted by a fitter. The apparatuses 152 are controllable apparatuses or components which form part of the comfort system 150, such as one or more ventilation motors, valves, flow regulators, air vents, etc. The sensors 151 also form part of the comfort system and comprise, for example, one or more temperature sensors in the various rooms, one or more atmospheric humidity sensors in the various rooms, one or more CO₂ sensors in the various rooms, etc. Drawing 1 also shows external sources 153 outside the comfort system. The external sources are sensors or other information sources which do not form part of the comfort system, such as for example web applications, sensors or other apparatuses which are connected via the internet and provide weather forecasts or current tem peratures.

Drawing 1 furthermore shows an embodiment of the anomaly detection control device 100 according to the invention. This embodiment 100 comprises a first interface, 101 or IF1, configured to receive sensor data from the sensors 151 of the comfort system 150, a second interface, 102 or IF2, configured to receive operational data from the apparatuses 152 of the comfort system 150, and a third interface, 103 or IF3, configured to receive external data from the external sources 153. The interfaces 101-103 may be wireless or wired.

The data which are received over the long term, being at least 24 hours, but preferably several days, weeks, months or years, via the interfaces 101-103 are stored in a central database 105 which forms part of the anomaly detection control device 100. The central database 105 will store historical data and will typically do this for several comfort systems which are installed in different buildings at various locations. The central database 105 may, for example, be installed on servers of a producer of comfort systems or in a cloud storage system which is managed by a third party, typically a cloud system operator.

Using the historical data stored in the central database 105, a first profile module 106 will generate an apparatus-type profile for each type of apparatus. An apparatus-type profile is a list of properties of that type of apparatus which is used under certain circumstances. The list of properties comprises standard values and/or standard intervals for parameters and sensor values which can be related to that type of apparatus. These standard values and/or standard intervals are obtained by combining data from different apparatuses of that particular type, preferably in several installations, and/or by analysing data from sensors related to these apparatuses. The standard values and/or standard intervals may also comprise time sequences in order to model, for example, the typical behaviour over time of certain sensors correlated with an apparatus of that type. The circumstances are also important because the same type of apparatus may behave differently, depending on the circumstances in which they are used. Thus, when a bedroom valve is used in a double bedroom, its standard behaviour will differ from when it is used in a children's bedroom. The first profile module 106 will thus, for example, generate a first apparatus-type profile for a certain type of bathroom valve, generate a second apparatus-type profile for a certain type of bedroom valve used in a double bedroom, generate a third apparatus-type profile for the same type of bedroom valve used in a children's bedroom, generate a fourth apparatus-type profile for a certain type of ventilation motor, generate a fifth apparatus-type profile for a certain type of flow regulator, etc., together the apparatus-type profiles 108. Each apparatus-type profile contains standard values or standard intervals for values of operational parameters of that type of apparatus used under certain circumstances and/or of sensor parameters related to that type of apparatus used under those circumstances. The standard values or standard intervals are obtained from operational installations. This will usually be carried out in two steps. In a first step, apparatuses are clustered for each type, so that similar apparatuses which are used under similar circumstances will be grouped in the same cluster. In a second step, the standard values and/or standard intervals within each cluster are determined, for example by averaging over time, averaging across many installations, by aggregation algorithms or by machine-learning technology, such as neural networks. The standard values and/or standard intervals are regularly adjusted, so that the apparatus-type profiles 108 are thus dynamic.

By using the historical data stored in the central database 105, a second profile module 107 will generate an apparatus-profile for each individual apparatus. The apparatus-profile models the standard behaviour of the specific apparatus and thus comprises standard values and/or standard intervals for values of the operational parameters of that specific apparatus and/or standard values and/or standard intervals for values of related sensors and actuators. The standard values or standard intervals are obtained from the specific installation of which the apparatus forms part, for example by averaging over time. To this end, the second profile module uses the operational data which have been obtained from the specific apparatus over the long term, and possibly also the sensor data obtained from one or more sensors over the long term which can be correlated with the specific apparatus. The expression over the long term is understood to mean longer than 24 hours, preferably several days, weeks or even months or years. The standard values and/or standard intervals may also comprise time sequences in order to model, for example, the typical behaviour over time of certain sensors correlated with that specific apparatus. The standard values and/or standard intervals are regularly adjusted, so that the apparatus-profiles 109 are therefore also dynamic, but still based on long-term data. A variation in short-term data - data of the last 24 hours - which only occurs once will possibly be related to an error or anomaly, as will be explained below. If this is not the case and the variation occurs more often in the future, then the variation will become part of the apparatus-profile for that specific apparatus.

The anomaly detection device 100 according to the invention furthermore comprises an analysing module 110 which substantially performs three different kinds of tests 111-113. In a first kind of test 111, recent operational data and/or sensor data related to a specific apparatus are compared to the standard values and/or standard intervals from the apparatus-type profile for the apparatus type to which that specific apparatus belongs. If the deviation exceeds predetermined or dynamic thresholds set for these standard values and/or standard intervals - positive first test - then this will be reported to the anomaly detection module 120. The first test 111 will thus compare the behaviour of a specific apparatus to the typical behaviour of similar apparatuses under similar circumstances. In a second kind of test 112, recent operational data and/or sensor data related to a specific apparatus are compared to the standard values and/or standard intervals from the apparatus-profile for the specific apparatus. If the deviation exceeds predetermined or dynamic thresholds set for these standard values and/or standard intervals - positive second test - then this will again be reported to the anomaly detection module 120. The second test 112 will thus compare the recent behaviour of a specific apparatus (short term) to the typical behaviour of that same specific apparatus in the past (long term). In a third kind of test 113, recent operational data and/or sensor data related to a specific apparatus are compared to the data which are obtained from related apparatuses or sensors, for example external sources 153 for the comfort system 150 of which the specific apparatus forms part. If the deviation exceeds predetermined or dynamic thresholds set for the data obtained from related apparatuses and/or sensors - positive third test - then this will again be reported to the anomaly detection module 120. The third test 113 will thus compare the data related to a specific apparatus to similar data received from related apparatuses or sensors. A related apparatus or related sensor is an apparatus or sensor which measures parameters similar to those which are being measured by the specific apparatus or the specific sensor. This may be exactly the same parameter or a parameter which can be correlated with a parameter which is measured by the specific apparatus or the specific sensor. The related apparatus or the related sensor may form part of the comfort system, but may also be outside the comfort system. The growing trend to incorporate sensors in all kinds of apparatuses and to connect such apparatuses or sensors via the internet (Internet of Things, abbreviated loT) increases the chance of the same parameter in a building or room being measured by several sensors or apparatuses. The third test thus makes it possible to compare the behaviour of an apparatus or sensor to the behaviour of a related apparatus or sensor which, in the same building or in the same room, measures the same parameter or measures a parameter which can be correlated with a measurement by the specific apparatus or the specific sensor.

The results of the tests 111-113 are transmitted to the anomaly detection module 120 which detects anomalies from the results, so that the anomalies can be reported to a manager of the building or comfort system 150. Thus, the anomaly detection module 120 from Drawing 1 uses algorithms in order to, on the basis of the results of the tests 111-113, detect a mismatch between the type of room and type of apparatus 121, in order to detect an obstruction 122 in a line, in order to detect a leak 123, in order to detect a defective apparatus 124, in order to detect a defective sensor 125 and in order to detect a soiled sensor 126. However, the person skilled in the art will understand that the present invention is not limited to the possibility of detecting a specific anomaly or a specific combination of anomalies. Alternative embodiments are conceivable, in which one or more of the anomalies 121-126 are detectable or in which other anomalies than those shown in Drawing 1 are detectable. The person skilled in the art will also understand that the detection of a specific anomaly may be performed on the basis of any combination of the tests 111-113, optionally supplemented by other tests. Alternative embodiments are conceivable in which an anomaly is detected on the basis of a different combination of the tests 111-113 than that which has been given in this patent application by way of example. Alternative embodiments are also conceivable in which the tests 111-113 are supplemented by yet other tests in order to detect or confirm an anomaly.

The anomaly detection module 120 may, on the basis of the results of the first test 121, for example come to the conclusion that there is a mismatch for a specific valve between the type of valve and the room for which this valve is being used. If valve operational data and sensor data are obtained for a valve of the bathroom type which deviate excessively from the typical values of the profile of the bathroom valve-type, then the anomaly detection module 120 comes to the conclusion that the bathroom valve in question was not installed in a bathroom and thus, that an incorrect type of valve has been used. If the atmospheric humidity measured by a sensor which is related to the bathroom valve, for example, does not regularly show peaks as a result of someone having a bath or taking a shower, then there will not be a match with the profile of a bathroom valve-type and the anomaly detection module 120 will indicate that there is an anomaly of the kind "incorrect type of apparatus". This may be due to an oversight on the part of the fitter who has fitted an incorrect type of valve, but this may also occur when a bathroom is given a new function after renovation, as a result of which the room is no longer used as bathroom. The anomaly detection module 120 may possibly determine the correct type of valve which has to be fitted to replace the incorrect valve from the operational data and sensor data which were obtained for the respective valve. If a sensor which is related to the valve, for example, systematically measures an elevated atmospheric humidity at night, then the anomaly detection module 120 infers that this is a bedroom and the user is advised to replace the respective valve by a valve of the bedroom valve-type.

On the basis of the results of the first test (111) and the second test (112), the anomaly detection module 120 may, for example, come to the conclusion that there is an obstruction in a line. A result of an obstruction is that soiling particles in a room will be carried away less quickly. If the first test shows that the CO₂ content measured by a specific CO₂ sensor in a well-defined room deviates from the type-profile for CO₂ sensors (positive first test) and it is also found that the CO₂ content which was recently measured by this CO₂ sensor is also much higher than the values measured in the past (positive second test), then the anomaly detection module 120 comes to the conclusion that there is a blockage in the discharge line of the comfort system for that room. If a time sequence shows that a moisture peak value in a certain room decreases less quickly at a certain ventilation flow rate than the standard values of the type-profile for an apparatus in this room (positive first test) and if the moisture peak value also decreases less quickly than has been measured historically for that apparatus (positive second test), then the anomaly detection module 120 also comes to the conclusion that there is an obstruction in the discharge line of the comfort system. The cause of such a blockage may be of various kinds: a piece of furniture may have been moved, resulting in it blocking an air vent, a valve may have become stuck in a certain position, dust or mould in the line may have caused constriction of the passage, etc.

On the basis of the results of the first test and second test, the anomaly detection module 120 may also, for example, come to the conclusion that there is an air leak. If there is an air leak, there will be a pressure drop in the comfort system, as a result of which the ventilation flow decreases. If a flow measurement for a room - directly or indirectly due to a pressure drop - deviates greatly from the standard flow values from the type-profile of apparatuses which are used in this room (positive first test) and the flow measurement also deviates greatly from previous flow measurements associated with apparatuses in the room (positive second test), then the anomaly detection module 120 will infer that there is an air leak in the ventilation circuit for this room.

On the basis of the results of the second test, the anomaly detection module 120 may, for example, come to the conclusion that an apparatus is defective. If it is found that soiling particles measured by a sensor associated with a certain valve are carried away less quickly than before by comparing recent sensor values to the sensor values of the profile for this specific valve (positive second test), then the anomaly detection module 120 infers that the valve is defective and the user may be advised to perform maintenance or to replace the valve.

On the basis of the results of the first test, the second test and the third test, the anomaly detection module 120 may, for example, come to the conclusion that a certain sensor is defective. A poorly functioning sensor will generate values which deviate from the standard values or standard intervals for values of sensors of this type (positive first test) and the values generated by such sensor will also deviate from the values which are measured by related sensors which measure identical or correlated parameters in the same room (positive third test). A shift in the interval of values which are measured by a sensor or an increase in the interval of values which are measured compared to the past (positive second test) may be a further indication or confirmation of the fact that a sensor functions poorly.

On the basis of the results of the second test, the anomaly detection module 120 may, for example, also come to the conclusion that a sensor is soiled. Recent sensor values will gradually deviate (drift) from previously measured sensor values (positive second test) as the sensor becomes increasingly soiled. The anomaly detection module 120 is able to determine when the deviation exceeds a threshold compared to previously measured sensor values and may advise the user to clean or replace the sensor as a preventative measure.

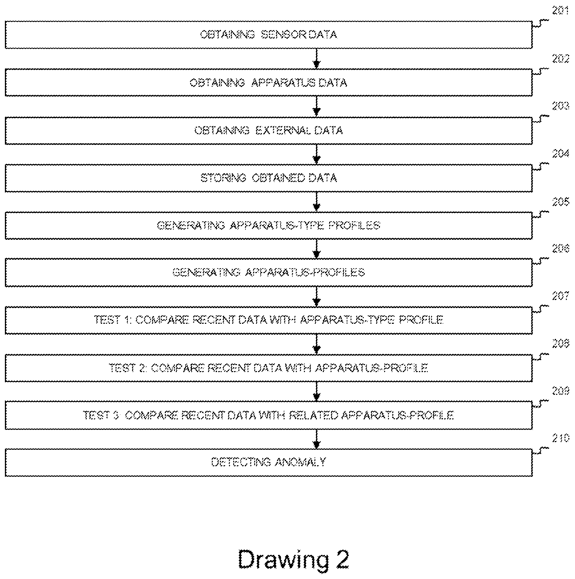

Drawing 2 is a pseudo flow diagram of the steps in an embodiment of the method for detecting anomalies in a comfort system. In step 201, sensor data are obtained from sensors in the comfort system of the building. In step 202, operational data are obtained from apparatuses in the comfort system of the building. In step 203, external data are obtained from sources outside the comfort system of the building. The collected sensor data, operational data and external data are stored in a central database in step 204. The stored data are used to generate apparatus-type profiles with standard values and standard intervals for each type of apparatus, as is indicated by step 205. The stored data are also used to generate apparatus-profiles comprising historical values and intervals for each individual apparatus, as is indicated in step 206. In a first test, which forms part of step 207, recent apparatus and sensor data will be compared to the values from the apparatus-type profile for the corresponding type of apparatus or sensor. In a second test, which forms part of step 208, recent apparatus and sensor data will be compared to the values from the apparatus type for the specific apparatus or sensor. In a third test, which forms part of step 209, recent apparatus and sensor data will be compared to data from related apparatuses or sensors. Positive first, second and/or third tests which indicate that the deviation exceeds certain thresholds make it possible to detect anomalies in step 210. Although Drawing 2 shows the steps 201-210 in sequence, it will be clear to the person skilled in the art that the steps of the method illustrated by Drawing 2 may be performed in parallel by different components of an anomaly detection device for a comfort system.

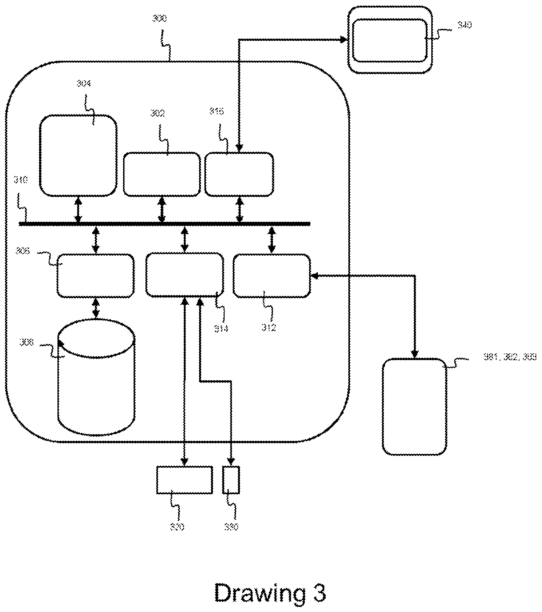

Drawing 3 shows a suitable computer system 300 for performing one or more steps in the method of the above embodiment(s). Computer system 300 may generally be configured as a computer suitable for general purposes and may comprise a bus 310, a processor 302, a local memory 304, one or more optional input interfaces 314, one or more output interfaces 316, a communication interface 312, a storage element interface 306 and one or more storage elements 308. Bus 310 may comprise one or more conductors which make communication between the components of the computer system 300 possible. Processor 302 may comprise any type of conventional processor or microprocessor which interprets and carries out program instructions. Local memory 304 may comprise a Random Access Memory (RAM) or another type of dynamic storage device which stores information and instructions to be carried out by processor 302, and/or may comprise a Read-Only Memory (ROM) or another type of statistical storage device which stores statistical information and instructions for use by processor 302. Input interface 314 may comprise one or more conventional mechanisms which allow an operator to input information into the computer device 300, such as a keyboard 320, a mouse 330, a pen, voice recognition and/or biometric mechanisms, a touch screen, etc. Output interface 316 may comprise one or more conventional mechanisms which dispense information to the operator, such as a screen 340, a printer 350, a loudspeaker, etc. Communication interface 312 may comprise a transceiver-like mechanism, such as for example one or more ethernet interfaces, which allows the computer system 300 to communicate with other devices and/or systems 381, 382, 383, for example a transmitter/receiver for communicating with the comfort system 120 in Drawing 1. The communication interface 312 of computer system 300 may be connected to another computer system by means of a Local Area Network (LAN) or a Wide Area Network (WAN), such as for example the internet. Storage element interface 306 may comprise a malfunction interface, such as for example a Serial Advanced Technology Attachment (SATA) interface or a Small Computer System Interface (SCSI), for connecting bus 310 to one or more storage elements 308, such as one or more local disks, for example SATA disk drives, and may control the reading and writing of data from and/or to these storage elements 308. Although the storage elements 308 have been described above as a local disk, any other suitable computer-readable medium, such as a removable magnetic disk, optical storage media, such as a CD or DVD, ROM disc, solid-state drives, flash-memory cards, could generally be used. The above-described system 300 may also operate as a Virtual Machine beyond the physical hardware.

The steps illustrated in the above embodiment(s) may also be implemented as program instructions which are stored in local memory 304 of the computer system 300, to be carried out by the processor 302 thereof. Alternatively, the instructions may be stored on the storage element 308 or may be accessible on another computer system via the communication interface 312.

Although the present invention has been illustrated by means of specific embodiments, it will be clear to the person skilled in the art that the invention is not limited to the details of the above illustrative embodiments, and that the present invention may be carried out with various changes and modifications without thereby departing from the scope of the invention which is defined by the appending claims. The present embodiments therefore have to be regarded in all respects as being illustrative and not restrictive, with the area of application of the invention being defined by the attached claims and not by the above description, and any changes which fall within the scope of the claims are therefore deemed to be within the scope of the invention. In addition, the reader of this patent application will understand that the words "comprising" or "comprise" do not exclude other elements or steps, that the word "a(n)" does not exclude the plural, and that a single element, such as a computer system, a processor or another integrated unit, may perform the functions of various ancillary means which are mentioned in the claims. Any changes in the claims should not be interpreted as a limitation of the claims in question. The terms "first", "second", "third", "a", "b", "c" and the like, when used in the description or in the claims, are used to distinguish between similar elements or steps and do not necessarily describe a sequential or chronological order. In the same manner, the terms "top side ", "bottom side", "over", "under" and the like are used for the purpose of the description and they do not necessarily refer to relative positions. It should be understood that these terms are interchangeable under the appropriate circumstances and that embodiments of the invention are able to function according to the present invention in different sequences or orientations than those described or illustrated above.

## Claims

1. Anomaly detection device (100) for detecting an anomaly in a comfort system (150) installed in a building comprising one or more rooms, said anomaly detection device (100) comprising:
- an interface (101) for obtaining sensor data from one or more sensors (151) in said comfort system (150);
- an interface (102) for obtaining operational data from one or more apparatuses (152) in said comfort system (150);
- a interface (103) for obtaining external data from one or more sources (153) outside said comfort system (150);
- a central database (105) for storing said sensor data, said operational data and said external data as respective time sequences, referred to collectively as stored data,
**CHARACTERISED IN THAT** said anomaly detection device (100) further comprises:
- a first profile module (106) configured to generate an apparatus-type profile (108) for each type of apparatus or sensor on the basis of said stored data;
- a second profile module (107) configured to generate an apparatus-profile (109) for each individual apparatus or sensor on the basis of said stored data;
- an analysing module (110) coupled to said database (105), said first profile module (106) and said second profile module (107), and configured to:
- compare, in a first test (111), recent operational data and/or sensor data for a specific apparatus or sensor with the apparatus-type profile (108) of the type of apparatus to which said specific apparatus or sensor belongs; and/or
- compare, in a second test (112), recent operational data and/or sensor data for a specific apparatus or sensor with the apparatus-profile (109) of said specific apparatus or sensor; and/or
- compare, in a third test (113), recent operational data and/or sensor data and/or external data for a specific apparatus or sensor with the apparatus-profile of one or more related apparatuses for said specific apparatus or sensor;
- an anomaly detection module (120) configured to detect an anomaly for said specific apparatus or sensor on the basis of a deviation in the first test (111), the second test (112) and/or the third test (113) in excess of a threshold.

2. Anomaly detection device (100) according to Claim 1, wherein the anomaly detection module (120) is configured to detect, on the basis of said first test (111), that an apparatus of the incorrect type (121) was installed in a room of said building.

3. Anomaly detection device (100) according to one of the preceding claims, wherein the anomaly detection module (120) is configured to detect obstruction (122) of a line in said comfort system (150) on the basis of said first test (111) and said second test (112).

4. Anomaly detection device (100) according to one of the preceding claims, wherein the anomaly detection module (120) is configured to detect an air leak (123) in said comfort system (150) on the basis of said first test (111) and said second test (112).

5. Anomaly detection device (100) according to one of the preceding claims, wherein the anomaly detection module (120) is configured to detect a defective apparatus (124) in said comfort system (150) on the basis of said second test (112).

6. Anomaly detection device (100) according to one of the preceding claims, wherein the anomaly detection module (120) is configured to detect a defective sensor (125) in said comfort system (150) on the basis of said first test (111) and said second test (112) and said third test (113).

7. Anomaly detection device (100) according to one of the preceding claims, wherein the anomaly detection module (120) is configured to detect a soiled sensor (126) in said comfort system (150) on the basis of said second test (112).

8. Anomaly detection device (100) according to one of the preceding claims, wherein said comfort system (150) comprises a ventilation system.

9. Anomaly detection device (100) according to one of the preceding claims, wherein said comfort system (150) comprises a sunblind system.

10. Computer-implemented method for detecting an anomaly in a comfort system (150) installed in a building comprising one or more rooms, said method comprising:
- obtaining (201) sensor data from one or more sensors (151) in said comfort system (150);
- obtaining (202) operational data from one or more apparatuses (152) in said comfort system (150);
- obtaining (203) external data from one or more sources (153) outside said comfort system (150);
- storing (204) said sensor data, said operational data and said external data in a central database (105) as respective time sequences, collectively referred to as stored data,
**CHARACTERISED IN THAT** said method further comprises:
- generating (205) an apparatus-type profile (108) for each type of apparatus or sensor on the basis of said stored data;
- generating (206) an apparatus-profile (109) for each individual apparatus or sensor on the basis of said stored data;
- analysing (207-209) said stored data comprising:
- in a first test (111), comparing (207) recent operational data and/or sensor data for a specific apparatus or sensor with the apparatus-type profile (108) of the type of apparatus to which said specific apparatus or sensor belongs; and/or
- in a second test (112), comparing (208) recent operational data and/or sensor data for a specific apparatus or sensor with the apparatus-profile (109) of said specific apparatus or sensor; and/or
- in a third test (113), comparing (209) recent operational data and/or sensor data and/or external data for a specific apparatus or sensor with the apparatus-profile of one or more related apparatuses for said specific apparatus or sensor;
- detecting (210) an anomaly for said specific apparatus or sensor on the basis of a deviation in the first test (111), the second test (112) and/or the third test (113) in excess of a threshold.

11. Computer program product containing computer-executable instructions to perform the following steps if this program is performed on a computer for detecting an anomaly in a comfort system (150) installed in a building comprising one or more rooms:
- obtaining (201) sensor data from one or more sensors (151) in said comfort system (150);
- obtaining (202) operational data from one or more apparatuses (152) in said comfort system (150);
- obtaining (203) external data from one or more sources (153) outside said comfort system (150);
- storing (204) said sensor data, said operational data and said external data in a central database (150) as respective time sequences, collectively referred to as stored data,
**CHARACTERISED IN THAT** said computer program product further comprises computer-executable instructions to perform the following steps:
- generating (205) an apparatus-type profile (108) for each type of apparatus or sensor on the basis of said stored data;
- generating (206) an apparatus-profile (109) for each individual apparatus or sensor on the basis of said stored data;
- analysing (207-209) said stored data comprising:
- in a first test (111), comparing (207) recent operational data and/or sensor data for a specific apparatus or sensor with the apparatus-type profile (108) of the type of apparatus to which said specific apparatus or sensor belongs; and/or
- in a second test (112), comparing (208) recent operational data and/or sensor data for a specific apparatus or sensor with the apparatus-profile (109) of said specific apparatus or sensor; and/or
- in a third test (113), comparing (209) recent operational data and/or sensor data and/or external data for a specific apparatus or sensor with the apparatus-profile of one or more related apparatuses for said specific apparatus or sensor;
- detecting (210) an anomaly for said specific apparatus or sensor on the basis of a deviation in the first test (111), the second test (112) and/or the third test (113) in excess of a threshold.

12. Computer-readable storage means containing the computer program product according to Claim 11.

## Patentansprüche

1. Anomaliedetektionsvorrichtung (100) zum Detektieren einer Anomalie in einem Komfortsystem (150), das in einem Gebäude, das einen oder mehreren Räume umfasst, installiert ist, wobei die Anomaliedetektionsvorrichtung (100) Folgendes umfasst:
- eine Schnittstelle (101) zum Erlangen von Sensordaten von einem oder mehreren Sensoren (151) in dem Komfortsystem (150);
- eine Schnittstelle (102) zum Erlangen von Betriebsdaten von einer oder mehreren Einrichtungen (152) in dem Komfortsystem (150);
- eine Schnittstelle (103) zum Erlangen externer Daten von einer oder mehreren Quellen (153) außerhalb des Komfortsystems (150);
- eine zentrale Datenbank (105) zum Speichern der Sensordaten, der Betriebsdaten und der externen Daten als jeweilige Zeitsequenzen, die gemeinsam als gespeicherte Daten bezeichnet werden,
**DADURCH GEKENNZEICHNET, DASS** die Anomaliedetektionsvorrichtung (100) ferner Folgendes umfasst:
- ein erstes Profilmodul (106), das dazu konfiguriert ist, auf der Grundlage der gespeicherten Daten ein Einrichtungstypprofil (108) für jeden Typ von Einrichtung oder Sensor zu erzeugen;
- ein zweites Profilmodul (107), das dazu konfiguriert ist, auf der Grundlage der gespeicherten Daten ein Einrichtungsprofil (109) für jede einzelne Einrichtung oder jeden einzelnen Sensor zu erzeugen;
- ein Analysemodul (110), das mit der Datenbank (105), dem ersten Profilmodul (106) und dem zweiten Profilmodul (107) gekoppelt und zu Folgendem konfiguriert ist:
- in einem ersten Test (111), Vergleichen jüngster Betriebsdaten und/oder Sensordaten für eine spezifische Einrichtung oder einen spezifischen Sensor mit dem Einrichtungstypprofil (108) des Typs der Einrichtung, zu dem die spezifische Einrichtung oder der spezifische Sensor gehört; und/oder
- in einem zweiten Test (112), Vergleichen jüngster Betriebsdaten und/oder Sensordaten für eine spezifische Einrichtung oder einen spezifischen Sensor mit dem Einrichtungsprofil (109) der spezifischen Einrichtung oder des spezifischen Sensors; und/oder
- in einem dritten Test (113), Vergleichen jüngster Betriebsdaten und/oder Sensordaten und/oder externer Daten für eine spezifische Einrichtung oder einen spezifischen Sensor mit dem Einrichtungsprofil einer oder mehrerer zugehöriger Einrichtungen für die spezifische Einrichtung oder den spezifischen Sensor;
- ein Anomaliedetektionsmodul (120), das dazu konfiguriert ist, eine Anomalie für die spezifische Einrichtung oder den spezifischen Sensor auf der Grundlage einer Abweichung in dem ersten Test (111), dem zweiten Test (112) und/oder dem dritten Test (113) über einen Schwellenwert hinaus zu detektieren.

2. Anomaliedetektionsvorrichtung (100) nach Anspruch 1, wobei das Anomaliedetektionsmodul (120) dazu konfiguriert ist, auf der Grundlage des ersten Tests (111) zu detektieren, dass eine Einrichtung des falschen Typs (121) in einem Raum des Gebäudes installiert wurde.

3. Anomaliedetektionsvorrichtung (100) nach einem der vorhergehenden Ansprüche, wobei das Anomaliedetektionsmodul (120) dazu konfiguriert ist, eine Behinderung (122) einer Leitung in dem Komfortsystem (150) auf der Grundlage des ersten Tests (111) und des zweiten Tests (112) zu detektieren.

4. Anomaliedetektionsvorrichtung (100) nach einem der vorhergehenden Ansprüche, wobei das Anomaliedetektionsmodul (120) dazu konfiguriert ist, einen Luftaustritt (123) in dem Komfortsystem (150) auf der Grundlage des ersten Tests (111) und des zweiten Tests (112) zu detektieren.

5. Anomaliedetektionsvorrichtung (100) nach einem der vorhergehenden Ansprüche, wobei das Anomaliedetektionsmodul (120) dazu konfiguriert ist, eine defekte Einrichtung (124) in dem Komfortsystem (150) auf der Grundlage des zweiten Tests (112) zu detektieren.

6. Anomaliedetektionsvorrichtung (100) nach einem der vorhergehenden Ansprüche, wobei das Anomaliedetektionsmodul (120) dazu konfiguriert ist, einen defekten Sensor (125) in dem Komfortsystem (150) auf der Grundlage des ersten Tests (111) und des zweiten Tests (112) und des dritten Tests (113) zu detektieren.

7. Anomaliedetektionsvorrichtung (100) nach einem der vorhergehenden Ansprüche, wobei das Anomaliedetektionsmodul (120) dazu konfiguriert ist, einen verschmutzten Sensor (126) in dem Komfortsystem (150) auf der Grundlage des zweiten Tests (112) zu detektieren.

8. Anomaliedetektionsvorrichtung (100) nach einem der vorhergehenden Ansprüche, wobei das Komfortsystem (150) ein Belüftungssystem umfasst.

9. Anomaliedetektionsvorrichtung (100) nach einem der vorhergehenden Ansprüche, wobei das Komfortsystem (150) ein Sonnenschutzsystem umfasst.

10. Computerimplementiertes Verfahren zum Detektieren einer Anomalie in einem Komfortsystem (150), das in einem Gebäude, das einen oder mehreren Räume umfasst, installiert ist, wobei das Verfahren Folgendes umfasst:
- Erlangen (201) von Sensordaten von einem oder mehreren Sensoren (151) in dem Komfortsystem (150);
- Erlangen (202) von Betriebsdaten von einer oder mehreren Einrichtungen (152) in dem Komfortsystem (150);
- Erlangen (203) externer Daten von einer oder mehreren Quellen (153) außerhalb des Komfortsystems (150);
- Speichern (204) der Sensordaten, der Betriebsdaten und der externen Daten in einer zentralen Datenbank (105) als jeweilige Zeitsequenzen, die gemeinsam als gespeicherte Daten bezeichnet werden,
**DADURCH GEKENNZEICHNET, DASS** das Verfahren ferner Folgendes umfasst:
- Erzeugen (205) eines Einrichtungstypprofils (108) für jeden Typ von Einrichtung oder Sensor auf der Grundlage der gespeicherten Daten;
- Erzeugen (206) eines Einrichtungsprofils (109) für jede einzelne Einrichtung oder jeden einzelnen Sensor auf der Grundlage der gespeicherten Daten;
- Analysieren (207-209) der gespeicherten Daten, umfassend:
- in einem ersten Test (111), Vergleichen (207) jüngster Betriebsdaten und/oder Sensordaten für eine spezifische Einrichtung oder einen spezifischen Sensor mit dem Einrichtungstypprofil (108) des Typs der Einrichtung, zu dem die spezifische Einrichtung oder der spezifische Sensor gehört; und/oder
- in einem zweiten Test (112), Vergleichen (208) jüngster Betriebsdaten und/oder Sensordaten für eine spezifische Einrichtung oder einen spezifischen Sensor mit dem Einrichtungsprofil (109) der spezifischen Einrichtung oder des spezifischen Sensors; und/oder
- in einem dritten Test (113), Vergleichen (209) jüngster Betriebsdaten und/oder Sensordaten und/oder externer Daten für eine spezifische Einrichtung oder einen spezifischen Sensor mit dem Einrichtungsprofil einer oder mehrerer zugehöriger Einrichtungen für die spezifische Einrichtung oder den spezifischen Sensor;
- Detektieren (210) einer Anomalie für die spezifische Einrichtung oder den spezifischen Sensor auf der Grundlage einer Abweichung in dem ersten Test (111), dem zweiten Test (112) und/oder dem dritten Test (113) über einen Schwellenwert hinaus.

11. Computerprogrammprodukt, das computerausführbare Anweisungen zum Durchführen der folgenden Schritte enthält, falls dieses Programm auf einem Computer durchgeführt wird, um eine Anomalie in einem Komfortsystem (150) zu detektieren, das in einem Gebäude installiert ist, das einen oder mehrere Räume umfasst:
- Erlangen (201) von Sensordaten von einem oder mehreren Sensoren (151) in dem Komfortsystem (150);
- Erlangen (202) von Betriebsdaten von einer oder mehreren Einrichtungen (152) in dem Komfortsystem (150);
- Erlangen (203) externer Daten von einer oder mehreren Quellen (153) außerhalb des Komfortsystems (150);
- Speichern (204) der Sensordaten, der Betriebsdaten und der externen Daten in einer zentralen Datenbank (150) als jeweilige Zeitsequenzen, die gemeinsam als gespeicherte Daten bezeichnet werden,
**DADURCH GEKENNZEICHNET, DASS** das Computerprogrammprodukt ferner computerausführbare Anweisungen zum Durchführen der folgenden Schritte umfasst:
- Erzeugen (205) eines Einrichtungstypprofils (108) für jeden Typ von Einrichtung oder Sensor auf der Grundlage der gespeicherten Daten;
- Erzeugen (206) eines Einrichtungsprofils (109) für jede einzelne Einrichtung oder jeden einzelnen Sensor auf der Grundlage der gespeicherten Daten;
- Analysieren (207-209) der gespeicherten Daten, umfassend:
- in einem ersten Test (111), Vergleichen (207) jüngster Betriebsdaten und/oder Sensordaten für eine spezifische Einrichtung oder einen spezifischen Sensor mit dem Einrichtungstypprofil (108) des Typs der Einrichtung, zu dem die spezifische Einrichtung oder der spezifische Sensor gehört; und/oder
- in einem zweiten Test (112), Vergleichen (208) jüngster Betriebsdaten und/oder Sensordaten für eine spezifische Einrichtung oder einen spezifischen Sensor mit dem Einrichtungsprofil (109) der spezifischen Einrichtung oder des spezifischen Sensors; und/oder
- in einem dritten Test (113), Vergleichen (209) jüngster Betriebsdaten und/oder Sensordaten und/oder externer Daten für eine spezifische Einrichtung oder einen spezifischen Sensor mit dem Einrichtungsprofil einer oder mehrerer zugehöriger Einrichtungen für die spezifische Einrichtung oder den spezifischen Sensor;
- Detektieren (210) einer Anomalie für die spezifische Einrichtung oder den spezifischen Sensor auf der Grundlage einer Abweichung in dem ersten Test (111), dem zweiten Test (112) und/oder dem dritten Test (113) über einen Schwellenwert hinaus.

12. Computerlesbares Speichermittel, das Computerprogrammprodukt nach Anspruch 11 enthaltend.

## Revendications

1. Dispositif de détection d'anomalie (100) permettant de détecter une anomalie dans un système de confort (150) installé dans un immeuble comprenant une ou plusieurs pièces, ledit dispositif de détection d'anomalie (100) comprenant :
- une interface (101) destinée à obtenir des données de capteur provenant d'un ou plusieurs capteurs (151) dans ledit système de confort (150) ;
- une interface (102) destinée à obtenir des données opérationnelles provenant d'un ou plusieurs appareils (152) dans ledit système de confort (150) ;
- une interface (103) destinée à obtenir des données externes provenant d'une ou plusieurs sources (153) extérieures audit système de confort (150) ;
- une base de données centrale (105) destinée à stocker lesdites données de capteur, lesdites données opérationnelles et lesdites données externes sous forme de séquences temporelles respectives, désignées collectivement sous le nom de données stockées,
**CARACTÉRISÉ EN CE QUE** ledit dispositif de détection d'anomalie (100) comprend en outre :
- un premier module de profil (106) configuré pour générer un profil de type d'appareil (108) pour chaque type d'appareil ou de capteur sur la base desdites données stockées ;
- un second module de profil (107) configuré pour générer un profil d'appareil (109) pour chaque appareil ou capteur individuel sur la base desdites données stockées ;
- un module d'analyse (110) couplé à ladite base de données (105), audit premier module de profil (106) et audit second module de profil (107), et configuré pour :
- comparer, dans un premier test (111), les données opérationnelles récentes et/ou les données de capteur pour un appareil ou un capteur spécifique au profil de type d'appareil (108) du type d'appareil auquel appartient ledit appareil ou ledit capteur spécifique ; et/ou
- comparer, dans un deuxième test (112), les données opérationnelles récentes et/ou les données de capteur pour un appareil ou un capteur spécifique au profil d'appareil (109) dudit appareil ou dudit capteur spécifique ; et/ou
- comparer, dans un troisième test (113), les données opérationnelles récentes et/ou les données de capteur et/ou les données externes pour un appareil ou un capteur spécifique au profil d'appareil d'un ou plusieurs appareils associés pour ledit appareil ou ledit capteur spécifique ;
- un module de détection d'anomalie (120) configuré pour détecter une anomalie pour ledit appareil ou ledit capteur spécifique sur la base d'un écart dans le premier test (111), le deuxième test (112) et/ou le troisième test (113) dépassant un seuil.

2. Dispositif de détection d'anomalie (100) selon la revendication 1, ledit module de détection d'anomalie (120) étant configuré pour détecter, sur la base dudit premier test (111), qu'un appareil du type incorrect (121) a été installé dans une pièce dudit immeuble.

3. Dispositif de détection d'anomalie (100) selon l'une des revendications précédentes, ledit module de détection d'anomalie (120) étant configuré pour détecter une obstruction (122) d'une ligne dans ledit système de confort (150) sur la base dudit premier test (111) et dudit deuxième test (112).

4. Dispositif de détection d'anomalie (100) selon l'une des revendications précédentes, ledit module de détection d'anomalie (120) étant configuré pour détecter une fuite d'air (123) dans ledit système de confort (150) sur la base dudit premier test (111) et dudit deuxième test (112).

5. Dispositif de détection d'anomalie (100) selon l'une des revendications précédentes, ledit module de détection d'anomalie (120) étant configuré pour détecter un appareil défectueux (124) dans ledit système de confort (150) sur la base dudit deuxième test (112).

6. Dispositif de détection d'anomalie (100) selon l'une des revendications précédentes, ledit module de détection d'anomalie (120) étant configuré pour détecter un capteur défectueux (125) dans ledit système de confort (150) sur la base dudit premier test (111) et dudit deuxième test (112) et dudit troisième test (113).

7. Dispositif de détection d'anomalie (100) selon l'une des revendications précédentes, ledit module de détection d'anomalie (120) étant configuré pour détecter un capteur encrassé (126) dans ledit système de confort (150) sur la base dudit deuxième test (112).

8. Dispositif de détection d'anomalie (100) selon l'une des revendications précédentes, ledit système de confort (150) comprenant un système de ventilation.

9. Dispositif de détection d'anomalie (100) selon l'une des revendications précédentes, ledit système de confort (150) comprenant un système de stores.

10. Procédé mis en oeuvre par ordinateur permettant de détecter une anomalie dans un système de confort (150) installé dans un immeuble comprenant une ou plusieurs pièces, ledit procédé comprenant :
- l'obtention (201) de données de capteur provenant d'un ou plusieurs capteurs (151) dans ledit système de confort (150) ;
- l'obtention (202) de données opérationnelles provenant d'un ou plusieurs appareils (152) dans ledit système de confort (150) ;
- l'obtention (203) de données externes provenant d'une ou plusieurs sources (153) extérieures audit système de confort (150) ;
- le stockage (204) desdites données de capteur, desdites données opérationnelles et desdites données externes dans une base de données centrale (105) sous forme de séquences temporelles respectives, désignées collectivement sous le nom de données stockées,
**CARACTÉRISÉ EN CE QUE** ledit procédé comprend en outre :
- la génération (205) d'un profil de type d'appareil (108) pour chaque type d'appareil ou de capteur sur la base desdites données stockées ;
- la génération (206) d'un profil d'appareil (109) pour chaque appareil ou chaque capteur individuel sur la base desdites données stockées ;
- l'analyse (207 à 209) desdites données stockées comprenant :
- dans un premier test (111), la comparaison (207) des données opérationnelles récentes et/ou des données de capteur pour un appareil ou un capteur spécifique au profil de type d'appareil (108) du type d'appareil auquel appartient ledit appareil ou ledit capteur spécifique ; et/ou
- dans un deuxième test (112), la comparaison (208) des données opérationnelles récentes et/ou des données de capteur pour un appareil ou un capteur spécifique au profil d'appareil (109) dudit appareil ou dudit capteur spécifique ; et/ou
- dans un troisième test (113), la comparaison (209) des données opérationnelles récentes et/ou des données de capteur et/ou des données externes pour un appareil ou un capteur spécifique au profil d'appareil d'un ou plusieurs appareils associés pour ledit appareil ou ledit capteur spécifique ;
- la détection (210) d'une anomalie pour ledit appareil ou ledit capteur spécifique sur la base d'un écart dans le premier test (111), le deuxième test (112) et/ou le troisième test (113) dépassant un seuil.

11. Produit de programme informatique contenant des instructions exécutables par ordinateur pour effectuer les étapes suivantes si ce programme est exécuté sur un ordinateur de détection d'anomalie dans un système de confort (150) installé dans un immeuble comprenant une ou plusieurs pièces :
- l'obtention (201) de données de capteur provenant d'un ou plusieurs capteurs (151) dans ledit système de confort (150) ;
- l'obtention (202) de données opérationnelles provenant d'un ou plusieurs appareils (152) dans ledit système de confort (150) ;
- l'obtention (203) de données externes provenant d'une ou plusieurs sources (153) extérieures audit système de confort (150) ;
- le stockage (204) desdites données de capteur, desdites données opérationnelles et desdites données externes dans une base de données centrale (150) sous forme de séquences temporelles respectives, désignées collectivement sous le nom de données stockées,
**CARACTÉRISÉ EN CE QUE** ledit produit de programme informatique comprend en outre des instructions exécutables par ordinateur pour effectuer les étapes suivantes :
- la génération (205) d'un profil de type d'appareil (108) pour chaque type d'appareil ou de capteur sur la base desdites données stockées ;
- la génération (206) d'un profil d'appareil (109) pour chaque appareil ou chaque capteur individuel sur la base desdites données stockées ;
- l'analyse (207 à 209) desdites données stockées comprenant :
- dans un premier test (111), la comparaison (207) des données opérationnelles récentes et/ou des données de capteur pour un appareil ou un capteur spécifique au profil de type d'appareil (108) du type d'appareil auquel appartient ledit appareil ou ledit capteur spécifique ; et/ou
- dans un deuxième test (112), la comparaison (208) des données opérationnelles récentes et/ou des données de capteur pour un appareil ou un capteur spécifique au profil d'appareil (109) dudit appareil ou dudit capteur spécifique ; et/ou
- dans un troisième test (113), la comparaison (209) des données opérationnelles récentes et/ou des données de capteur et/ou des données externes pour un appareil ou un capteur spécifique au profil d'appareil d'un ou plusieurs appareils associés pour ledit appareil ou ledit capteur spécifique ;
- la détection (210) d'une anomalie pour ledit appareil ou ledit capteur spécifique sur la base d'un écart dans le premier test (111), le deuxième test (112) et/ou le troisième test (113) dépassant un seuil.

12. Moyen de stockage lisible par ordinateur contenant le produit de programme informatique selon la revendication 11.
